# EUROPÄISCHE PATENTANMELDUNG

(11) **EP 3 217 034 A1**
(43) Veröffentlichungstag der Anmeldung: **13.09.2017**
(21) Anmeldenummer: 17159952.5
(22) Anmeldetag: 08.03.2017
(51) Int. Cl.: F16F 3/087, F16F 1/387

(54) **ELASTOMERBUCHSE**

(30) Priorität: 09.03.2016 DE 102016104323
(71) Anmelder: TrelleborgVibracoustic GmbH, 64293 Darmstadt (DE)
(72) Erfinder: Dr. Eckel, Hans-Gerd, 69514 Laudenbach (DE); Giraldo Arias, Santiago, 69117 Heidelberg (DE)
(74) Vertreter: Flügel Preissner Schober Seidel

(57) **Zusammenfassung**

Die vorliegende Erfindung betrifft eine Elastomerbuchse (10) mit einer Innenhülse (12), einer die Innenhülse (12) in radialem Abstand umgebenden Außenhülse (14) und wenigstens einer zwischen der Innenhülse (12) und der Außenhülse (14) angeordneten Federvorrichtung (16a, 16b), wobei die Federvorrichtung (16a, 16b) eine erste Feder (22a, 22b) und eine zweite Feder (24a, 24b) aufweist, und wobei die zweite Feder (24a, 24b) mit einer Schaltvorrichtung (28a, 28b) gekoppelt ist, mittels derer die zweite Feder (24a, 24b) freigebbar oder blockierbar ist.

## Beschreibung

Die vorliegende Erfindung betrifft eine Elastomerbuchse, insbesondere eine Fahrwerksbuchse für einen Fahrschemel einer Kraftfahrzeugachse.

Elastomerbuchsen der eingangs genannten Art werden auch als Gummibuchsen oder Gummimetalllager bezeichnet, die als Fahrwerksbuchsen in einer Kraftfahrzeugachse zum Einsatz kommen, um die Schwingungsübertragung beispielsweise vom einem Fahrschemel, Hilfsrahmen oder Lenker an das Chassis zu reduzieren. Bekannte Elastomerbuchsen weisen eine Innenhülse, eine die Innenhülse mit radialem Abstand umgebende Außenhülse und einen dazwischen angeordneten Federkörper aus einem elastomeren Werkstoff auf, der die Innenhülse und die Außenhülse miteinander verbindet.

Durch Einstellung der Steifigkeit des Federkörpers können die fahrdynamischen Eigenschaften und der Fahrkomfort beeinflusst werden. So sorgt eine hohe Steifigkeit für gute fahrdynamische Eigenschaften während eine geringe Steifigkeit für einen hohen Fahrkomfort sorgt. Üblicherweise werden Elastomerbuchsen mit einer hohen Steifigkeit ausgelegt, um eine gute Spurstabilität zu erhalten. Es gibt jedoch Fahrsituationen, bei denen ein hoher Fahrkomfort gewünscht ist, wie beispielsweise bei einer stoßartigen Längsanregung, die während einer Schwellenüberfahrt auftritt.

Eine Aufgabe der Erfindung ist es, eine Elastomerbuchse zu schaffen, die eine an die Fahrsituation anpassbare Steifigkeit aufweist.

Diese Aufgabe wird durch eine Elastomerbuchse mit den Merkmalen des Anspruchs 1 gelöst.

Vorteilhafte Ausgestaltungen der Elastomerbuchse sind Gegenstand der abhängigen Ansprüche.

Unter x-Richtung ist vorliegend die Fahrzeuglängsrichtung zu verstehen. Unter y-Richtung ist eine Richtung quer zur Fahrtrichtung zu verstehen, die auch als Fahrzeugquerrichtung bezeichnet wird. Und unter z-Richtung ist eine Erstreckungsrichtung senkrecht zur x- und y-Richtung, also in Höhe des Fahrzeugs, zu verstehen.

Die Elastomerbuchse weist eine Innenhülse, eine die Innenhülse mit radialem Abstand umgebende Außenhülse und wenigstens eine zwischen der Innenhülse und der Außenhülse angeordnete Federvorrichtung auf. Die Federvorrichtung weist eine erste Feder und eine zweite Feder auf, wobei die zweite Feder mit einer Schaltvorrichtung gekoppelt ist, mittels derer die zweite Feder freigebbar oder blockierbar ist. Mittels der Schaltvorrichtung kann die Steifigkeit und damit die Fahrdynamik und der Fahrkomfort der Elastomerbuchse an die Fahrsituation angepasst werden. Zur Erzielung einer hohen Fahrdynamik wird die zweite Feder mittels der Schaltvorrichtung mechanisch blockiert. Dadurch ist nur noch die erste Feder wirksam, die für eine steife Anbindung des Chassis sorgt. Zur Erzielung eines hohen Fahrkomforts wird die zweite Feder mittels der Schaltvorrichtung freigegeben. Dadurch sind, insbesondere bei einer stoßartigen Anregung der Elastomerbuchse in Fahrzeuglängsrichtung, beide Federn wirksam und sorgen so für eine weiche Anbindung an das Chassis. Vorteilhaft ist die zweite Feder mit einer Schaltvorrichtung versehen, die nur das Federn in x-Richtung erlaubt. Vorteilhaft sind die beiden Federn aus einem elastomeren Werkstoff hergestellt.

In einer vorteilhaften Ausgestaltung ist eine Führungsvorrichtung vorgesehen, die eine Bewegung der zweiten Feder in eine z-Richtung und/oder eine y-Richtung verhindert. Die Führungsvorrichtung bewirkt, dass die zweite Feder im freigegeben Zustand nur in x-Richtung, also in Fahrzeuglängsrichtung, wirksam ist. Dadurch beeinflusst die zweite Feder die Steifigkeit der Elastomerbuchse nur in Fahrzeuglängsrichtung. Die Führungsvorrichtung kann ein separates Element oder Bestandteil der Innenhülse oder Außenhülse sein.

Vorteilhaft weist die Führungsvorrichtung einen von der Innenhülse abragenden Vorsprung und ein erstes Gleitelement auf, wobei das erste Gleitelement mit der zweiten Feder gekoppelt ist und an dem Vorsprung anliegt. Dadurch wird eine einfache und kostengünstige Führung der Bewegung der zweiten Feder, insbesondere in x-Richtung, geschaffen. Das Gleitelement gleitet vorteilhaft während einer Bewegung der zweiten Feder an dem Vorsprung entlang.

In einer vorteilhaften Ausgestaltung sind die beiden Federn in Reihe geschalten. Weiterhin vorteilhaft weist die zweite Feder eine geringere Steifigkeit als die erste Feder auf, wobei die erste Feder radial außenliegend und die zweite Feder radial innenliegend angeordnet sind. Durch die Reihenschaltung wird erreicht, dass die beiden Federn für eine weiche Anbindung an das Chassis (hoher Fahrkomfort) gleichzeitig wirksam sind und für eine steife Anbindung an das Chassis (hohe Fahrdynamik) die zweite Feder mechanisch blockiert werden kann.

Vorteilhaft ist in die zweite Feder wenigstens eine Ausnehmung eingebracht. Die Ausnehmung reduziert die Steifigkeit der zweiten Feder vorteilhaft in x-Richtung und senkt die Beanspruchung der Feder bei größerer Auslenkung deutlich ab. Vorzugsweise ist die Ausnehmung näherungsweise nierenförmig ausgebildet. Weiterhin vorteilhaft sind mehrere Ausnehmungen in die zweite Feder eingebracht, wobei vorzugsweise die Ausnehmungen in äquidistanten Abständen in die zweite Feder eingebracht sind.

Vorteilhaft ist zwischen den beiden Federn eine Zwischenhülse angeordnet. Die Zwischenhülse trennt die beiden Federn voneinander, wobei vorzugsweise die beiden Federn haftend mit der Zwischenhülse verbunden sind.

In einer vorteilhaften Ausgestaltung ist die Schaltvorrichtung als eine Konuskupplung ausgebildet, wobei in einer Schließstellung der Konuskupplung die zweite Feder blockiert und in einer Offenstellung der Konuskupplung die zweite Feder freigegeben ist. Durch Betätigung der Konuskupplung kann die je nach Fahrsituation erforderliche Steifigkeit der Elastomerbuchse eingestellt werden. Bevorzugt ist die Konuskupplung als eine druckbeaufschlagbare Konuskupplung ausgebildet.

In einer vorteilhaften Ausgestaltung weist die Konuskupplung das erste Gleitelement und wenigstens einen bewegbaren Ringkolben auf, wobei der Ringkolben in der Schließstellung an dem ersten Gleitelement anliegt und in der Offenstellung von dem ersten Gleitelement beabstandet ist. Vorteilhaft weist das Gleitelement eine dem Ringkolben zugewandte konische Oberfläche auf, wobei der Ringkolben eine dazu korrespondierende konische Anlagefläche aufweist. In der Offenstellung kann das erste Gleitelement an dem von der Innenhülse abragenden Vorsprung in x-Richtung, also in Fahrzeuglängsrichtung, entlanggleiten, so dass beide Federn wirksam sind. In der Schließstellung wird ein Entlanggleiten des Gleitelements an dem Vorsprung verhindert, so dass die zweite Feder blockiert ist.

Vorteilhaft weist der Ringkolben eine konische Anlagefläche aufweist, wobei die Anlagefläche einen Winkel zwischen ca. 10° und ca. 30° aufweist. Dadurch tritt zum einen keine Selbsthemmung auf und zum anderen werden die austreibenden Kräfte auf den Ringkolben aus einer Radiallast nicht zu hoch. Darüber hinaus kann der Kraftbedarf zur Betätigung der Konuskupplung klein gehalten werden. Vorteilhaft wird der Winkel zwischen der Mittellinie und dem Konus gemessen.

Vorteilhaft ist der Ringkolben in einem Ringraum angeordnet, der mit einer Druckquelle verbunden ist. Zum Schließen der Konuskupplung wird der Ringraum über die Druckquelle mit Druck beaufschlagt, so dass der Ringkolben an dem Gleitelement anliegt und die zweite Feder blockiert. Vorteilhaft ist die Druckquelle als eine Druckluftquelle ausgebildet.

In einer vorteilhaften Ausgestaltung ist der Ringkolben mit wenigstens einem Federelement gekoppelt. Das Federelement drückt den Ringkolben von dem ersten Gleitelement im nicht druckbeaufschlagten Zustand weg, wenn der Ringraum hinter dem Ringkolben entlüftet wird. Das Federelement sorgt somit für ein rasches Öffnen der Konuskupplung. Vorteilhaft ist das Federelement als eine Druckfeder ausgebildet.

In einer weiteren vorteilhaften Ausgestaltung weist die Konuskupplung ein zweites Gleitelement auf, das zwischen dem ersten Gleitelement und der Zwischenhülse angeordnet ist. Dadurch weist die Führungsvorrichtung neben der eigentlichen Parallelführung eine selbsttätige kardanische Einstellung auf. Damit wird ein Verkanten vermieden. Zudem haben Einbau- und Bauteiltoleranzen keinen Einfluss auf das Reibverhalten der Führungsvorrichtung. Vorteilhaft weist das erste Gleitelement an einer dem zweiten Gleitelement zugewandten Oberfläche eine sphärische Kontur auf, wobei das zweite Gleitelement eine zu der sphärischen Oberfläche des ersten Gleitelements korrespondierende sphärische Anlagefläche aufweist.

In einer vorteilhaften Ausgestaltung sind die Flächen zwischen den beiden Gleitelementen sphärisch ausgebildet.

Vorteilhaft weist die Federvorrichtung einen Innenring und einen Außenring auf, wobei die beiden Federn zwischen dem Innenring und dem Außenring angeordnet sind. Die Federvorrichtung wird dann über seinen Innenring und Außenring in den zwischen der Innenhülse und der Außenhülse gebildeten Radialspalt eingepresst. Vorteilhaft ist die zweite Feder haftend mit der Innenhülse und die erste Feder haftend mit der Außenhülse verbunden, wobei zwischen den beiden Federn die Zwischenhülse angeordnet ist.

Vorteilhaft sind zwischen der Innenhülse und der Außenhülse zwei Federvorrichtungen angeordnet. Weiterhin vorteilhaft sind die beiden Federvorrichtungen über ein Verbindungselement miteinander verbunden. Weiterhin vorteilhaft ist das Verbindungselement als ein Ringelement ausgebildet, wobei jeweils ein Abschnitt der Federvorrichtungen von dem Ringelement aufgenommen ist, insbesondere eingepresst ist. Weiterhin vorteilhaft ist jeweils ein Abschnitt der Zwischenhülsen von dem Ringelement aufgenommen, insbesondere eingepresst.

Vorteilhaft ist jede zweite Feder der Federvorrichtung mit jeweils einer Schaltvorrichtung gekoppelt. Weiterhin vorteilhaft sind die Ringkolben der beiden Schaltvorrichtungen über Federelemente miteinander verbunden.

Nachfolgend wird die Elastomerbuchse anhand eines Ausführungsbeispiels, das in den Zeichnungen schematisch dargestellt ist, näher erläutert. Hierbei zeigen:
- Fig. 1: einen Querschnitt durch die Elastomerbuchse, wobei die Konuskupplung geschlossen ist;
- Fig. 2: einen Querschnitt durch die Elastomerbuchse, der um 90 Grad zu dem in Fig. 1 gezeigten Querschnitt versetzt ist, wobei die Konuskupplung geschlossen ist;
- Fig. 3: einen Querschnitt durch die Elastomerbuchse, wobei die Konuskupplung geöffnet ist;
- Fig. 4: einen Querschnitt durch die Elastomerbuchse, der um 90 Grad zu dem in Fig. 3 dargestellten Querschnitt versetzt ist, wobei die Konuskupplung geöffnet ist;
- Fig. 5: eine perspektivische Darstellung der Elastomerbuchse mit einem Teilausschnitt, wobei die Konuskupplung geschlossen ist;
- Fig. 6: eine perspektivische Darstellung der Elastomerbuchse mit einem Teilausschnitt, wobei die Konuskupplung geöffnet ist;
- Fig. 7: eine vergrößerte perspektivische Darstellung der Konuskupplung;
- Fig. 8: eine vergrößerte perspektivische Darstellung der Konuskupplung mit nur einem Gleitelement; und
- Fig. 9: eine Explosionsdarstellung der Bestandteile der Konuskupplung.

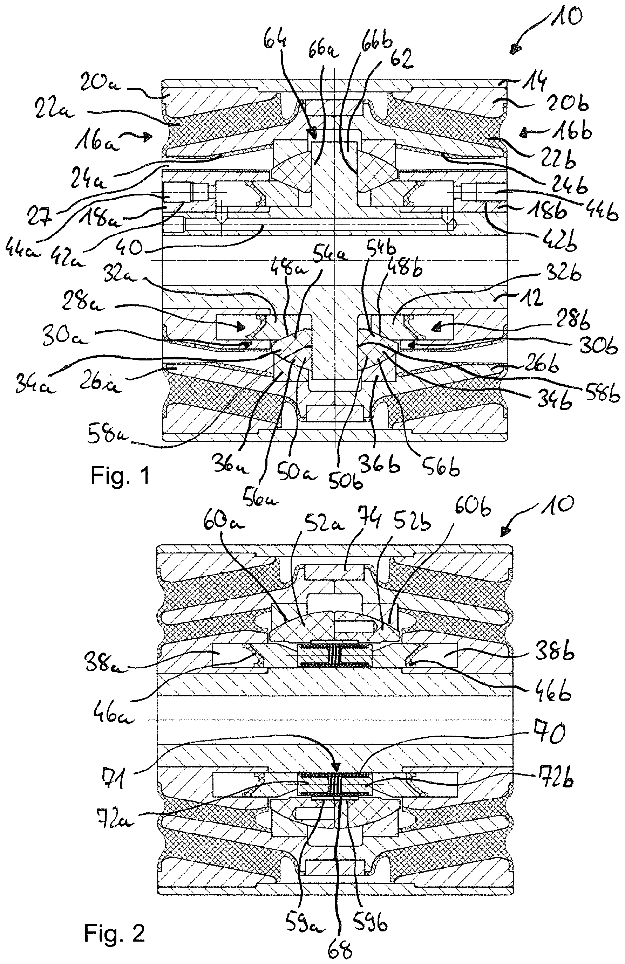

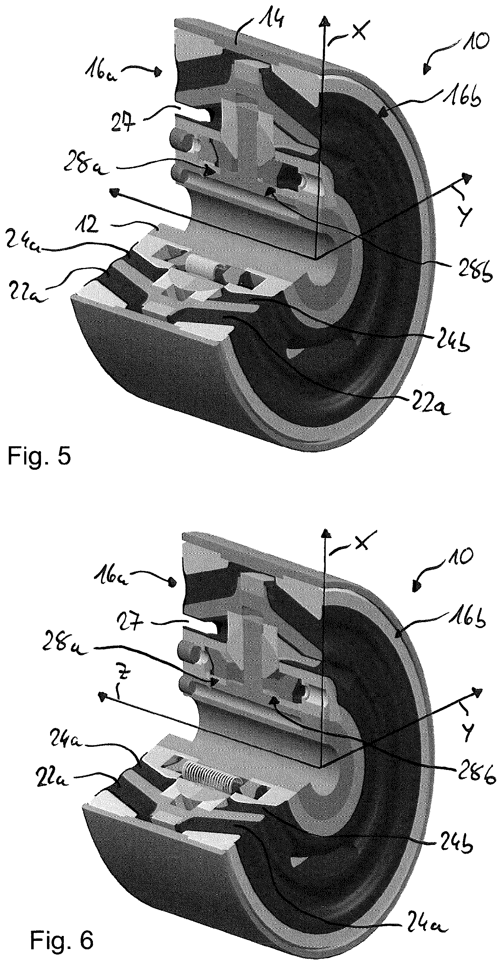

In den Fig. 1 bis 9 ist eine Elastomerbuchse 10 gezeigt, die als Fahrwerksbuchse in einer nicht dargestellten Kraftfahrzeugachse, insbesondere in einem Fahrschemel einer Kraftfahrzeughinterachse, eingesetzt wird, um die Schwingungsübertragung vom Fahrschemel an das Chassis zu reduzieren.

Die Elastomerbuchse 10 umfasst eine Innenhülse 12, eine die Innenhülse 12 mit radialem Abstand umgebende Außenhülse 14 und zwei Federvorrichtungen 16a, 16b, die zwischen der Innenhülse 12 und der Außenhülse 14 angeordnet sind.

Die Federvorrichtungen 16a, 16b weisen jeweils einen Innenring 18a, 18b, einen Außenring 20a, 20b, eine erste Feder 22a, 22b aus einem elastomeren Werkstoff, eine zweite Feder 24a, 24b aus einem elastomeren Werkstoff und eine zwischen den beiden Federn 22a, 22b, 24a, 24b angeordnete Zwischenhülse 26a, 26b auf.

Die erste Feder 22a, 22b ist haftend mit dem Außenring 20a, 20b und der Zwischenhülse 26a, 26b verbunden. Die zweite Feder 24a, 24b ist haftend mit der Zwischenhülse 26a, 26b und dem Innenring 18a, 18b verbunden. Die erste Feder 22a, 22a ist radial außenliegend und die zweite Feder 24a, 24b radial innenliegend angeordnet, wobei die beiden Federn 22a, 22b, 24a, 24 in Reihe geschalten sind. Die zweite Feder 24a, 24b ist zudem mit Ausnehmungen 27 versehen, die näherungsweise nierenförmig ausgebildet sind und die Steifigkeit der zweiten Feder 24a, 24b in x-Richtung verringern. Dadurch weist die erste Feder 22a, 22b eine höhere Steifigkeit als die zweite Feder 24a, 24b auf.

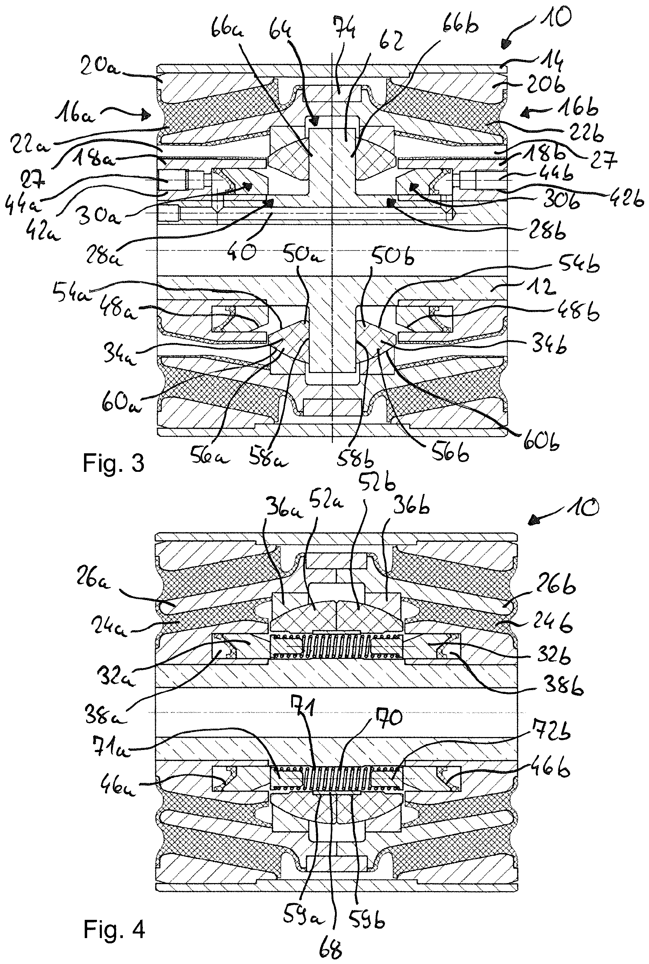

Wie insbesondere in den Fig. 1 bis 6 ersichtlich ist, ist die zweite Feder 24a, 24b mit einer Schaltvorrichtung 28a, 28b gekoppelt, mittels derer die zweite Feder 24a, 24b freigebbar oder blockierbar ist. Die Schaltvorrichtung 28a, 28b ist als eine druckbeaufschlagbare Konuskupplung 30a, 30b ausgebildet und weist einen Ringkolben 32a, 32b, ein erstes Gleitelement 34a, 34b und ein zweites Gleitelement 36a, 36b auf. In der in den Figuren 1, 2 und 5 gezeigten Schließstellung der Konuskupplung 30a, 30b ist die zweite Feder 24a, 24b blockiert. In der in den Figuren 3, 4 und 6 gezeigten Offenstellung der Konuskupplung 30a, 30b ist die zweite Feder 24a, 24b freigegeben und somit zuammen mit der ersten Feder 22a, 22b wirksam.

Der Ringkolben 32a, 32b ist in einem in den Innenring 18a, 18 eingebrachten Ringraum 38a, 38b bewegbar angeordnet, wobei der Ringraum 38a, 38b über einen ersten Kanal 40, der in die Innenhülse 12 eingebracht ist, mit einer nicht dargestellten Druckquelle, insbesondere einer Druckluftquelle, verbunden ist. In der Schließstellung der Konuskupplung 30a, 30b ist der Ringraum 38a, 38b mit Druck beaufschlagt, so dass der Ringkolben 32a, 32b gegen das erste Gleitelement 34a, 34b gedrückt ist, und die zweite Feder 24a, 24b blockiert. In der Offenstellung der Konuskupplung 30a, 30b wird der Ringraum 38a, 38b hinter dem Ringkolben 32a, 32b entlüftet.

Der Ringraum 38a, 38b ist zudem über einen zweiten Kanal 42, der in den Außenring 20a, 20b eingebracht ist, mit der Umgebung verbunden, wobei der zweite Kanal 42 mittels eines Verschlussstopfens 44a, 44b verschlossen ist. Vorzugsweise ist der Verschlussstopfen 44a, 44b in den zweiten Kanal 42a, 42b eingepresst.

Zur Abdichtung des Ringraums 38a, 38b ist der Ringkolben 32a, 32b auf einer dem Ringraum 38a, 38 zugewandten Seite mit einer Ringkolbendichtung 46a, 46b versehen. Der Ringkolben 32a, 32b weist ferner eine konische Anlagefläche 48a, 48b zur Anlage an dem ersten Gleitelement 34a, 34b auf.

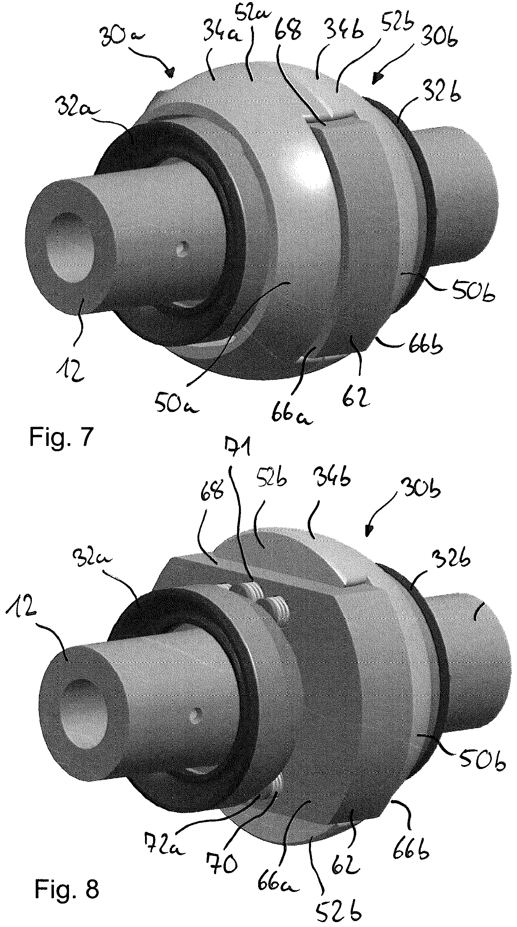

Das erste Gleitelement 34a, 34b ist ringförmig ausgebildet, wie in den Fig. 7 bis 9 ersichtlich ist. Das erste Gleitelement 34a, 34b weist ein Ringelement 50a, 50b und zwei von dem Ringelement 50a, 50b in z-Richtung abragende Absätze 52a, 52b auf. Das Ringelement 50a, 50b weist eine zu der konischen Anlagefläche 48a, 48b korrespondierende konische Fläche 54a, 54b, eine sphärische Fläche 56a, 56b und auf seiner Innenseite eine erste Führungsfläche 58a, 58b auf. Die Absätze 52a, 52b weisen an ihren Innenseiten eine zweite Führungsfläche 59a, 59b auf.

Wie in den Fig. 1 bis 6 und 9 ersichtlich ist, ist das zweite Gleitelement 36a, 36b ringförmig ausgebildet und weist eine zu der sphärischen Fläche 56a, 56b des ersten Gleitelements 34a, 34b dazu korrespondierende sphärische Anlagefläche 60a, 60b auf.

Wie in den Figuren ersichtlich ist, ist die Bewegung der zweiten Feder 24a, 24b durch eine Führungsvorrichtung 64 geführt. Die Führungsvorrichtung 64 weist einen von der Innenhülse 12 abragenden Vorsprung 62 und die ersten Gleitelemente 34a, 34b auf, wobei die erste Führungsfläche 58a, 58b des ersten Gleitelementes 34a, 34b an einer ersten Seitenwand 66a, 66b des Vorsprungs 62 anliegt und die zweite Führungsfläche 59a, 59b des Gleitelementes 34a, 34b an einer zweiten Seitenwand 68 des Vorsprungs 62 anliegt. Wie insbesondere in Fig. 7 ersichtlich ist, berühren sich die beiden ersten Gleitelemente 34a, 34b im Bereich der Stirnflächen der Absätze 52a, 52b derart, dass die beiden ersten Gleitelemente 34a, 34b den Vorsprung 62 umgreifen. Dadurch erlaubt die Führungsvorrichtung 64 in der Offenstellung der Konuskupplung 30a, 30b nur eine Bewegung der zweiten Feder 24a, 24b in x-Richtung, während die Führungsvorrichtung 30a, 30b eine Bewegung der zweiten Feder 24a, 24b in y-Richtung und in z-Richtung verhindert.

Das zweite Gleitelement 36a, 36b ist zwischen der Zwischenhülse 26a, 26b und dem ersten Gleitelement 34a, 34b angeordnet, wobei es mit seiner sphärischen Anlagefläche 60a, 60b an der sphärischen Fläche 56a, 56b des ersten Gleitelements 34a, 34b anliegt. Dadurch wird neben der eigentlichen Parallelführung der Führungsvorrichtung 64 auch eine selbsttätige kardanische Einstellung ermöglicht, sodass ein Verkanten vermieden wird, und Einbau- und Bauteiltoleranzen keinen Einfluss auf das Reibungsverhalten der Führungsvorrichtung 64 haben.

Wie insbesondere in den Fig. 3 bis 6 und 8 ersichtlich ist, sind zwischen den Ringkolben 32a, 32b mehrere Federelemente 70 angeordnet, die sich durch in den Vorsprung 62 eingebrachte Öffnungen 71 hindurch erstrecken. Jedes der Federelemente 70 stützt sich über Stifte 72a, 72b an einer Stirnseite der Ringkolben 32a, 32b ab. Die Federelemente 70 sind als Druckfedern ausgebildet und sorgen für ein rasches Öffnen der Konuskupplung 30a, 30b, wenn die Ringräume 38a, 38b entlüftet werden, indem die Federelemente 70 die Ringkolben 32a, 32b von den ersten Gleitelementen 34a, 34b wegdrücken.

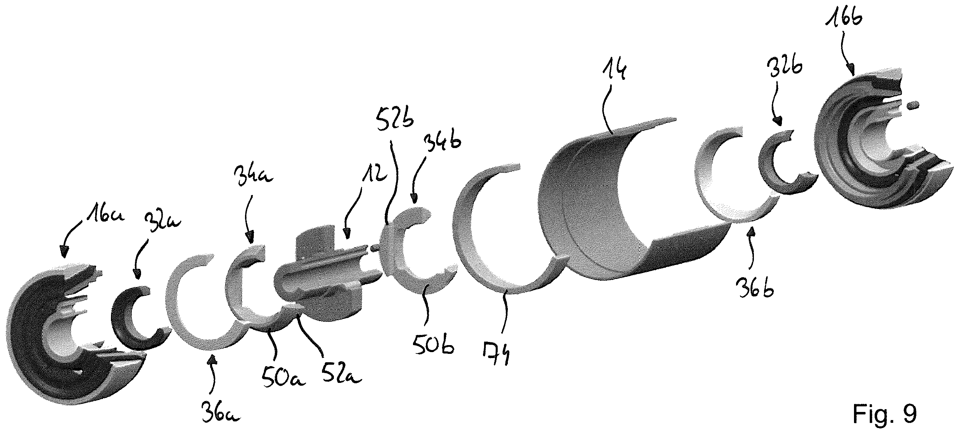

Wie in Fig. 9 ersichtlich ist, werden für den Zusammenbau der Elastomerbuchse 10 zunächst die ersten Gleitelemente 34a, 34b derart auf die Innenhülse aufgeschoben, dass die erste Führungsfläche 58a, 58b an der ersten Seitenwand 66a, 66a und die zweite Führungsfläche 59a, 59b an der zweiten Seitenwand 68a, 68b anliegt. Anschließend werden die zweiten Gleitelemente 36a, 36b und die Ringkolben 32a, 32b auf die Innenhülse 12 aufgeschoben und zur Anlage mit dem ersten Gleitelement 34a, 34b gebracht. Danach werden die beiden Federvorrichtungen 16a, 16b auf die Innenhülse 12 aufgepresst, wobei die Federvorrichtungen 16a, 16b über ein ringförmiges Verbindungselement 74 miteinander verbunden werden. Wie insbesondere in den Figuren 1 bis 6 ersichtlich ist, ist jeweils ein Abschnitt der Zwischenhülse 26a, 26b in das Verbindungselement 74 eingepresst. Schließlich wird diese vormontierte Einheit in die Außenhülse 14 eingepresst.

Im Folgenden werden die beiden Schaltzustände der Elastomerbuchse 10 näher erläutert. Im Normalfall soll die Elastomerbuchse 10 durch eine steife Anbindung an das Chassis für eine hohe Fahrdynamik sorgen. Hierzu wird die weiche, zweite Feder 24a, 24b mittels der Schaltvorrichtung 28a, 28b blockiert, indem die Ringräume 38a, 38b mit Druck beaufschlagt werden, sodass die Ringkolben 32a, 32b gegen die ersten Gleitelemente 34a, 34b gedrückt werden und so eine Bewegung der zweiten Federn 24a, 24b verhindern. Dadurch ist nur die steife, erste Feder 22a, 22b wirksam.

Um eine weichere Anbindung an das Chassis bei einer stoßartigen Längsanregung, wie dies beispielsweise bei einer Schwellenüberfahrt der Fall ist, zu ermöglichen, werden die zweiten Federn 24a, 24b mittels der Schaltvorrichtung 28a, 28b freigegeben. Hierzu werden die Ringräume 38a, 38b entlüftet. Zum erforderlichen raschen Öffnen drücken dann die Federelemente 70 die Ringkolben 32a, 32b von den ersten Gleitelementen 34a, 34b weg. Dadurch können sich die zweiten Federn 24a, 24b geführt durch die Führungsvorrichtung 64 in x-Richtung, also in Fahrzeuglängsrichtung, bewegen und so bei einer stoßartigen Längsanregung einen höheren Fahrkomfort durch eine weichere Anbindung der Elastomerbuchse 10 ermöglichen.

### Bezugszeichenliste

- 10: Elastomerbuchse
- 12: Innenhülse
- 14: Außenhülse
- 16a: Federvorrichtung
- 16b: Federvorrichtung
- 18a: Innenring
- 18b: Innenring
- 20a: Außenring
- 20b: Außenring
- 22a: erste Feder
- 22b: erste Feder
- 24a: zweite Feder
- 24b: zweite Feder
- 26a: Zwischenhülse
- 26b: Zwischenhülse
- 27: Ausnehmung
- 28a: Schaltvorrichtung
- 28b: Schaltvorrichtung
- 30a: Konuskupplung
- 30b: Konuskupplung
- 32a: Ringkolben
- 32b: Ringkolben
- 34a: erstes Gleitelement
- 34b: erstes Gleitelement
- 36a: zweites Gleitelement
- 36b: zweites Gleitelement
- 38a: Ringraum
- 38b: Ringraum
- 40: erster Kanal
- 42a: zweiter Kanal
- 42b: zweiter Kanal
- 44a: Verschlussstopfen
- 44b: Verschlussstopfen
- 46a: Ringkolbendichtung
- 46b: Ringkolbendichtung
- 48a: konische Anlagefläche
- 48b: konische Anlagefläche
- 50a: Ringelement
- 50b: Ringelement
- 52a: Absatz
- 52b: Absatz
- 54a: konische Fläche
- 54b: konische Fläche
- 56a: sphärische Fläche
- 56b: sphärische Fläche
- 58a: erste Führungsfläche
- 58b: erste Führungsfläche
- 59a: zweite Führungsfläche
- 59b: zweite Führungsfläche
- 60a: sphärische Anlagefläche
- 60b: sphärische Anlagefläche
- 62: Vorsprung
- 64: Führungsvorrichtung
- 66a: erste Seitenwand
- 66b: erste Seitenwand
- 68: zweite Seitenwand
- 70: Federelement
- 71: Öffnung
- 72a: Stift
- 72b: Stift
- 74: Verbindungselement
- x: x-Richtung
- y: y-Richtung
- z: z-Richtung

## Patentansprüche

1. Elastomerbuchse (10) mit einer Innenhülse (12), einer die Innenhülse (12) mit radialem Abstand umgebenden Außenhülse (14) und wenigstens einer zwischen der Innenhülse (12) und der Außenhülse (14) angeordneten Federvorrichtung (16a, 16b), wobei die Federvorrichtung (16a, 16b) eine erste Feder (22a, 22b) und eine zweite Feder (24a, 24b) aufweist, und wobei die zweite Feder (24a, 24b) mit einer Schaltvorrichtung (28a, 28b) gekoppelt ist, mittels derer die zweite Feder (24a, 24b) freigebbar oder blockierbar ist.

2. Elastomerbuchse nach Anspruch 1, **dadurch gekennzeichnet, dass** eine Führungsvorrichtung (64) vorgesehen ist, die eine Bewegung der zweiten Feder (24a, 24b) in eine z-Richtung und/oder eine y-Richtung verhindert.

3. Elastomerbuchse nach Anspruch 2 **dadurch gekennzeichnet, dass** die Führungsvorrichtung (64) einen von der Innenhülse (12) abragenden Vorsprung (62) und ein erstes Gleitelement (34a, 34b) aufweist, wobei das erste Gleitelement (34a, 34b) mit der zweiten Feder (24a, 24b) gekoppelt ist und an dem Vorsprung (62) anliegt.

4. Elastomerbuchse nach einem der vorhergehenden Ansprüche, **dadurch gekennzeichnet, dass** die beiden Federn (22a, 22b, 24a, 24b) in Reihe geschalten sind.

5. Elastomerbuchse nach einem der vorhergehenden Ansprüche, **dadurch gekennzeichnet, dass** die zweite Feder (24a, 24b) eine geringere Steifigkeit als die erste Feder (22a, 22b) aufweist, wobei die erste Feder (22a, 22b) radial außenliegend und die zweite Feder (24a, 24b) radial innenliegend angeordnet sind.

6. Elastomerbuchse nach einem der vorhergehenden Ansprüche, **dadurch gekennzeichnet, dass** in die zweite Feder (24a, 24b) wenigstens eine Ausnehmung (27) eingebracht ist.

7. Elastomerbuchse nach einem der vorhergehenden Ansprüche, **dadurch gekennzeichnet**, zwischen den beiden Federn (22a, 22b, 24a, 24b) eine Zwischenhülse (26a, 26b) angeordnet ist.

8. Elastomerbuchse nach einem der vorhergehenden Ansprüche, **dadurch gekennzeichnet, dass** die Schaltvorrichtung (28a, 28b) als eine Konuskupplung (30a, 30b) ausgebildet ist, wobei in einer Schließstellung der Konuskupplung (30a, 30b) die zweite Feder (24a, 24b) blockiert und in einer Offenstellung der Konuskupplung (30a, 30b) die zweite Feder (24a, 24b) freigegeben ist.

9. Elastomerbuchse nach Anspruch 8, **dadurch gekennzeichnet, dass** die Konuskupplung (30a, 30b) das erste Gleitelement (34a, 34b) und wenigstens einen bewegbaren Ringkolben (32a, 32b) aufweist, wobei der Ringkolben (32a, 32b) in der Schließstellung an dem ersten Gleitelement (34a, 34b) anliegt und in der Offenstellung von dem ersten Gleitelement (34a, 34b) beabstandet ist.

10. Elastomerbuchse nach Anspruch 9, **dadurch gekennzeichnet, dass** der Ringkolben (32a, 32b) eine konische Anlagefläche (48a, 48b) aufweist, wobei die Anlagefläche (48a, 48b) einen Winkel zwischen ca. 10° und ca. 30° aufweist.

11. Elastomerbuchse nach Anspruch 9 oder 10, **dadurch gekennzeichnet, dass** der Ringkolben (32a, 32b) in einem Ringraum (38a, 38b) angeordnet ist, der mit einer Druckquelle verbunden ist.

12. Elastomerbuchse nach einem der Ansprüche 9 bis 11, **dadurch gekennzeichnet, dass** der Ringkolben (32a, 32b) mit wenigstens einem Federelement (70) gekoppelt ist.

13. Elastomerbuchse nach einem der Ansprüche 9 bis 12, **dadurch gekennzeichnet, dass** die Konuskupplung (30a, 30b) ein zweites Gleitelement (36a, 36b) aufweist, das zwischen dem ersten Gleitelement (34a, 34b) und der Zwischenhülse (26a, 26b) angeordnet ist.

14. Elastomerbuchse nach Anspruch 13, **dadurch gekennzeichnet, dass** die Flächen (56a, 56b, 60a, 60b) zwischen den beiden Gleitelementen (34a, 34b, 36a, 36b) sphärisch ausgebildet sind.

15. Elastomerbuchse nach einem der vorhergehenden Ansprüche, **dadurch gekennzeichnet, dass** die Federvorrichtung (16a, 16b) einen Innenring (18a, 18b) und einen Außenring (20a, 20b) aufweist, zwischen denen die beiden Federn (22a, 22b, 24a, 24b) angeordnet sind.

16. Elastomerbuchse nach einem der vorhergehenden Ansprüche, **dadurch gekennzeichnet, dass** zwischen der Innenhülse (18a, 18b) und der Außenhülse (20a, 20b) zwei Federvorrichtungen (16a, 16b) angeordnet sind.
